# EUROPEAN PATENT APPLICATION

(11) **EP 4 764 435 A1**
(43) Date of publication of application: **24.06.2026**
(21) Application number: 24220573.0
(22) Date of filing: 17.12.2024
(51) Int. Cl.: G01K 1/02, G01K 15/00

(54) **METHOD FOR DETECTING A FAULTY TEMPERATURE SENSOR OUT OF A PLURALITY OF TEMPERATURE SENSORS IN A BATTERY ASSEMBLY FOR A VEHICLE, DATA PROCESSING APPARATUS, COMPUTER PROGRAM, COMPUTER-READABLE STORAGE MEDIUM, BATTERY ASSEMBLY FOR A VEHICLE, AND VEHICLE**

(71) Applicant: Volvo Car Corporation, 405 31 Göteborg (SE)
(72) Inventor: COLAK, Sime, 40531 Göteborg (SE); FORSSELL, Jonas, 40531 Göteborg (SE)
(74) Representative: Kransell & Wennborg KB

(57) **Abstract**

The disclosure relates to a method for detecting a faulty temperature sensor out of a plurality of temperature sensors in a battery assembly for a vehicle. Each of the plurality of temperature sensors is arranged in an associated location. The method comprises obtaining a plurality of data items (DI), wherein each data item (DI) is associated with a temperature sensor out of the plurality of temperature sensors and wherein each data item (DI) is indicative of a temperature and a location of the associated temperature sensor. The method further comprises comparing the data items (DI) with respect to the associated temperatures and/or the associated locations. Moreover, the method comprises determining, based on the comparing, one or more outlier data items (DI) out of the plurality of data items (DI) and inferring the one or more temperature sensors associated with the one or more outlier data items (DI) to be faulty. The disclosure further relates to a data processing apparatus, to a computer program and to a computer-readable storage medium. Furthermore, the disclosure is directed to a battery assembly for a vehicle and to a vehicle comprising the battery assembly.

## Description

### TECHNICAL FIELD

The present disclosure relates to a method for detecting a faulty temperature sensor out of a plurality of temperature sensors in a battery assembly for a vehicle.

Moreover, the present disclosure relates to a data processing apparatus, to a computer program and to a computer-readable storage medium for carrying out said method.

Furthermore, the present disclosure is directed to a battery assembly for a vehicle and to a vehicle comprising the battery assembly.

### BACKGROUND

A performance of a battery assembly for a vehicle, such as an ability to supply a particular amount of power to the vehicle, depends on a temperature of the battery assembly. In order to be able to condition the temperature of the battery assembly appropriately, a close-meshed temperature monitoring of the battery assembly is required.

Moreover, a battery assembly for a vehicle may be subject to a risk of a thermal runaway of individual cells of the battery assembly or of the entire battery assembly. In order to detect a thermal runaway as early as possible, a close-meshed temperature monitoring of the battery assembly is also required.

A close-meshed temperature monitoring of the battery assembly requires a plurality of temperature sensors. However, if the number of temperature sensors increases, the risk for one of these temperature sensors to be faulty also increases.

For a reliable temperature monitoring of the battery assembly, faulty temperature sensors need to be distinguished from thermal events of individual battery cells or of the entire battery assembly.

### SUMMARY

It is therefore an objective of the present disclosure to provide a method for detecting a faulty temperature sensor out of a plurality of temperature sensors in a battery assembly for a vehicle.

The problem is at least partially solved or alleviated by the subject matter of the independent claims of the present disclosure, wherein further examples are incorporated in the dependent claims.

According to a first aspect, there is provided a method for detecting a faulty temperature sensor out of a plurality of temperature sensors in a battery assembly for a vehicle. Each of the plurality of temperature sensors is arranged in an associated location. The method comprises:
- obtaining a plurality of data items, wherein each data item is associated with a temperature sensor out of the plurality of temperature sensors and wherein each data item is indicative of a temperature and a location of the associated temperature sensor,
- comparing the data items with respect to the associated temperatures and/or the associated locations,
- determining, based on the comparing, one or more outlier data items out of the plurality of data items and inferring the one or more temperature sensors associated with the one or more outlier data items to be faulty, or determining, based on the comparing, an absence of outlier data items.

Obtaining the plurality of data items is to be understood as receiving or determining the plurality of data items. Determining a data item of the plurality of data items may be accomplished by a temperature measurement of the associated temperature sensor. The location of the temperature sensors on and/or in the battery assembly is predefined, thus known. As a consequence, relative locations between the temperature sensors of the plurality of temperature sensors are known. Hence, a data item comprises data indicative of the temperature measurement of the associated temperature sensor and data indicative of the location of the associated temperature sensor. The data indicative of the location of the associated temperature sensor may refer to a location of the associated temperature sensor with respect to the battery assembly and/or to a location with respect to the other temperature sensors of the plurality of temperature sensors. Receiving the data items may be accomplished through a wired or through a wireless connection to the plurality of temperature sensors. The wired connection to the plurality of temperature sensors may be foreseen if the method is executed on a data processing apparatus that is internal to the vehicle. The wireless connection to the plurality of temperature sensors may be used if the method is executed on a data processing apparatus that is external to the vehicle, e.g. on an external cloud server. The comparing of the data items is conducted with respect to the temperatures indicated by the respective data items. Additionally, the comparing of the data items may be conducted with respect to the associated locations of the temperature sensors that the temperature measurements of the data items originate from. This particularly means that a distance between temperature sensors may be taken into account when the temperature values are compared. For example, only temperatures of temperatures sensors may be compared to one another that are within a predefined radius of interest. Additionally or alternatively, differences in temperature measurements of different temperature sensors may be weighted based on the distance between respective temperature sensors. If the comparing yields a temperature difference of one or more data items to other data items that is/are above a predefined threshold, it may be determined that the one or more data items is/are outlier data items. Consequently, the one or more temperature sensors associated with the one or more data items are denoted as faulty. A person skilled in the art will understand that if the data items of the plurality of data items that are compared originate from different temperature sensors, the data items of the plurality of data items may be associated with substantially the same point in time. In this case, at least three data items originating from at least three associated temperature sensors need to be compared. If the data items of the plurality of data items that are compared originate from the same temperature sensor, the data items of the plurality of data items may be determined at different points in time. In this case, at least two data items originating from the same associated temperature sensor need to be compared. The method has the effect that a faulty temperature sensor may reliably be identified from a plurality of temperature sensors.

It is noted that the temperature sensors from which the data items are obtained, may be operated independently from an operational state of the battery assembly, more precisely independently from an operational state of the battery cells of the battery assembly. This means that a temperature sensor may contribute to a data item independent of the fact whether the battery assembly or one or more battery cells of the battery assembly are used for driving the vehicle.

In an example, the comparing comprises calculating temperature differences between at least some data items and wherein the determining comprises comparing the calculated temperatures differences to a temperature difference threshold. This means that absolute values of the at least some data items indicative of the temperature of the associated temperature sensors are compared. Thus, also the temperature difference threshold is an absolute temperature value. The temperature difference threshold may, for example, be 10°C, 5°C or 3°C. If the temperature difference threshold is exceeded by one data item with respect to at least two other data items, the one data item is determined to be an outlier data item. Consequently, the one temperature sensor from which the one data item originates is denoted as faulty. Thus, the temperature difference threshold may also be referred to as allowable temperature difference threshold since no determination of an outlier data item and no denotation of a faulty temperature sensor is made if the temperature difference threshold is not exceeded. Comparing one data item to at least two other data items is necessary since it is not possible to determine which temperature measurement forms part of an outlier data item if the temperature difference threshold is exceeded by a difference between two temperature measurements only. The comparing needs to include at least three data items of different temperature sensors in order to be able to denote one of the temperature sensors as faulty. This may comprise scenarios in which the temperature difference between one data item and two other data items exceeds the temperature difference threshold. In these scenarios, the one data item is regarded as outlier data item and the associated temperature sensor is regarded as faulty. However, also in scenarios in which the temperature difference between one data item and two other data items only exceeds the temperature difference threshold with respect to one of the other data items, the one data item may still be regarded as outlier data item and the associated temperature sensor may be regarded as faulty. In such a scenario, the temperature difference between a first data item and a second data item of the other data items may be inferior to or equal to the temperature difference threshold. This makes the first data item and the second data item be regarded as regular, in other words, as correct data items, leaving the one data item regarded as outlier data item. In this context, a correct data item is associated with an actual phenomenon. In scenarios in which the temperature difference between all data items, i.e. the one data item and the two other data items, exceeds the temperature difference threshold, the data item indicating the maximum or the minimum temperature of the three data items may be determined as outlier data item. It is also possible that both data items indicating either the maximum or the minimum temperature of the three data items are determined as outlier data item. It is further possible that in such a scenario, which comprises some degree of ambiguity, further data items of further temperature sensors are taken into account in order to pronounce an outlier data item. It is understood that within this example, the data items originate from different temperature sensors. Thus, calculating temperature differences between at least some data items has the effect that an implausible deviation of one temperature sensor from at least two other temperature sensors may be determined in a reliable manner.

In an example, the temperature difference threshold is based on the locations of the compared data items. This may mean that the temperature difference threshold between data items being associated to any two temperature sensors may be different depending on a distance between the locations of the two temperature sensors. In particular, the larger the distance between locations of two temperature sensors, the larger the temperature difference of associated data items that may be acceptable. Thus, the temperature difference threshold between distant temperature sensors may be greater than between temperature sensors that are closer to one another or even neighboring. The allowable temperature difference threshold may scale linearly with the distance between two temperature sensors. A linear scaling is understood as a relation between the distance d between two temperature sensors and the allowable temperature difference threshold TDT that is according to the formula *TDT* = *m* · *d* + *t,* wherein m is a scaling factor of a positive value and t is a bias value that is non-negative, in other words, positive or zero. However, it is also conceivable that the allowable temperature difference threshold scales non-linearly with the distance between two temperature sensors. The allowable temperature difference threshold may relate to the distance between two temperature sensors in a logarithmic or logarithmic-type manner, in a square root or other root-type manner, or in any other manner that shows a saturation of the allowable temperature difference threshold with increasing distance between two temperature sensors. Accounting for the locations of data items, i.e. the distance between associated temperature sensors of associated data items, has the effect that an increasingly limited thermal conduction over greater distances between temperature sensors is factored in when inferring a temperature sensor as faulty. The temperature difference threshold being based on the locations of the compared data items may also mean that the temperature difference threshold is different depending on a position of the associated temperature sensors with respect to an edge of the battery assembly. If temperatures of temperature sensors that are both associated with battery cells that are located in a middle portion of the battery assembly or that are both associated with battery cells that are not located in a middle portion of the battery assembly are compared, the applicable temperature difference threshold may be smaller than if a temperature of a temperature sensor that is associated with a battery cell that is located in a middle portion of the battery assembly is compared to a temperature of a temperature sensor that is associated with a battery cell that is not located in a middle portion of the battery assembly. This accounts for increased thermal influence of a usually colder environment of the battery assembly on edge regions of the battery assembly compared to the middle portion of the battery assembly. All in all, the number of false positive determinations of a temperature sensor being faulty is reduced by accounting for the locations of the compared data items.

In an example, the comparing comprises calculating temperature gradients between at least some data items and wherein the determining comprises comparing the calculated temperature gradients to a temperature gradient threshold. This means that temperature differences of the at least some data items are referred to a further measurand that is different from a temperature. If the temperature gradient threshold is exceeded by one data item with respect to at least two other data items, the one data item is determined to be an outlier data item. Consequently, the one temperature sensor from which the one data item originates is denoted as faulty. Thus, the temperature gradient threshold may also be referred to as allowable temperature gradient threshold since no determination of an outlier data item and no denotation of a faulty temperature sensor is made if the temperature gradient threshold is not exceeded. Comparing one data item to at least two other data items is necessary since it is not possible to determine which temperature measurement forms part of an outlier data item if the temperature gradient threshold is exceeded by data items of two temperature sensors only. The comparing needs to include at least three data items of different temperature sensors in order to be able to denote one of the temperature sensors as faulty. This may comprise scenarios in which the temperature gradient between one data item and two other data items exceeds the temperature gradient threshold. In these scenarios, the one data item is regarded as outlier data item and the associated temperature sensor is regarded as faulty. However, also in scenarios in which the temperature gradient between one data item and two other data items only exceeds the temperature gradient threshold with respect to one of the other data items, the one data item may still be regarded as outlier data item and the associated temperature sensor may still be regarded as faulty. In such a scenario, the temperature gradient between a first data item and a second data item of the other data items may be inferior or equal to the temperature gradient threshold. This makes the first data item and the second data item be regarded as regular, in other words, correct data items, leaving the one data item regarded as outlier data item. In this context, a correct data item is associated with an actual phenomenon. In scenarios in which the temperature gradient between all data items, i.e. the one data item and the two other data items, exceeds the temperature gradient threshold, the data item indicating the maximum or the minimum temperature of the three data items may be determined as outlier data item. It is also possible that both data items indicating the maximum and the minimum temperature of the three data items, respectively, are determined as outlier data item. It is further possible that in such a scenario, which comprises a degree of ambiguity, further data items of further temperature sensors are taken into account in order to pronounce an outlier data item. Comparing data items in terms of temperature gradients is a reliable way of refining the detection of a faulty temperature sensor from a plurality of temperature sensors.

In an example, the temperature gradients are temperature gradients over time or temperature gradients over location. A temperature gradient over time is based on a temperature difference between data items originating from the same temperature sensor but from different points in time. The temperature gradient over time is determined by referring the temperature difference between data items originating from the same temperature sensor to the time difference between points in time at which the data items were determined. If the temperature gradient is a temperature gradient over time, also the temperature gradient threshold, to which the temperature gradient is compared, is a temperature gradient threshold over time. Thus, the temperature gradient threshold over time is an allowable temperature difference with respect to a unit time. This has the effect that implausibly quick changes in temperatures of a given temperature sensor may be reliably identified as outlier data item and the associated temperature sensor may be denoted as faulty. The temperature gradient threshold over time may, for example, be 10°C per minute or second, 5°C per minute or second, or 3°C per minute or second. A temperature gradient over location is based on a temperature difference between data items originating from different temperature sensors that are located at a distance from each other. The temperature gradient over location is determined by referring the temperature difference between data items from the different temperature sensors to the distance between them. If the temperature gradient is a temperature gradient over location, also the temperature gradient threshold, to which the temperature gradient is compared, is a temperature gradient threshold over location. Thus, the temperature gradient threshold over location is an allowable temperature difference with respect to a unit distance. This has the effect that thermal conduction within the battery assembly is accounted for. If there is an actual temperature change at a specific temperature sensor (increase or decrease), it is expected that a temperature change in the same direction (increase or decrease) will also be reflected in data items originating from neighboring temperature sensors due to thermal conduction. If there is a strong change in temperature from a specific temperature sensor that is not reflected in data items from neighboring temperature sensors, the data item from the specific temperature sensor may be regarded as implausible and, consequently, as an outlier data item. The specific temperature sensor may be denoted as faulty. The temperature gradient threshold over location may, for example, be 10°C per centimeter, 5°C per centimeter, or 3°C per centimeter.

In an example, the temperature gradient threshold is based on the locations of the compared data items. This means that the allowable temperature gradient threshold between any two data items may be different with respect to a location of the associated temperature sensor or temperature sensors. If the temperature gradient threshold is a temperature gradient threshold over time, the temperature gradient threshold over time may be smaller in a vicinity of an edge of the battery assembly. This has the effect that a higher thermal interaction of the battery assembly at its edges with an environment is accounted for. The environment is expected to undergo slow temperature changes compared to the battery assembly. Thus, also temperature sensors that are located in the vicinity of an edge of the battery assembly are expected to yield data items indicative of temperatures that change more slowly than temperature sensors that are located further away from an edge of the battery assembly, i.e. in the vicinity of a center of the battery assembly. The vicinity of an edge of the battery assembly may be defined as a distance to an edge of the battery assembly of 20 centimeters, 10 centimeters or 5 centimeters. The allowable temperature gradient threshold over time between any two data items may be even smaller if the associated temperature sensor is in the vicinity of a plurality of edges of the battery assembly. If the temperature gradient threshold is a temperature gradient threshold over location, the temperature gradient threshold over location may be higher if the compared data items originate from temperature sensors that are in the vicinity of a different number of edges of the battery assembly, i.e. one temperature sensor in the vicinity of the center of the battery assembly and one temperature sensor in the vicinity of an edge of the battery assembly or one temperature sensor in the vicinity of one edge of the battery assembly and one temperature sensor in the vicinity of two edges of the battery assembly. This has the effect that naturally cooler edge regions of the battery assembly are accounted for due to an increased level of thermal interaction with a cooler environment compared to regions of the battery assembly in the vicinity of the center of the battery assembly.

In an example, the temperature gradient threshold is based on an algebraic sign of the temperature gradient. In other words, it is taken into account if the temperature gradient between a first data item and a second data item is positive, i.e. the temperature indicated by the first data item is smaller than the temperature indicated by the second data item, or negative, i.e. the temperature indicated by the first data item is higher than the temperature indicated by the second data item. If the temperature gradient threshold is the temperature gradient threshold over time, the first data item may be determined prior to the second data item. Hence, a positive temperature gradient indicates a heating up of the associated temperature sensor. In turn, a negative temperature gradient indicates a cooling down of the associated temperature sensor. A higher temperature gradient threshold over time may be acceptable if the associated temperature sensor is heating up than when the associated temperature sensor is cooling down. This is because a quick heating up of the battery assembly of the vehicle may naturally occur due to dynamic driving maneuvers, e.g. a rapid acceleration of the vehicle or a strong recuperation when going down a steep hill, and an associated large current being drained from or fed into the battery assembly. If the temperature gradient threshold is the temperature gradient threshold over location, the first data item may be associated with a first temperature sensor located in the vicinity of an edge of the battery assembly and the second data item may be associated with a second temperature sensor that is not located in the vicinity of an edge of the battery assembly or at least not located in the vicinity of that many edges as the first temperature sensor. If the temperature gradient over location is positive, a higher temperature gradient threshold may be acceptable than when the temperature gradient is negative. This is because regions of the battery assembly that are located in the vicinity of fewer edges of the battery assembly, e.g. in the vicinity of the center of the battery assembly, are naturally expected to be warmer than or at least as warm as regions of the battery assembly that are located at the edges of the battery assembly due to the above-mentioned increased thermal interaction with the cooler environment at the edges of the battery assembly. Thus, the temperature gradient threshold being based on an algebraic sign of the temperature gradient enhances a reliability of the determination of outlier data items and faulty temperature sensors.

In the explanations with respect to calculating temperature differences between at least some data items and in the explanations with respect to calculating temperature gradients, it has been outlined that it is required to take at least three data items into account in order to be able to determine one or more outlier data items and in order to infer associated one or more temperature sensors as faulty. It is understood that one data item may be compared to at least two other data items in terms of temperature differences and in terms of temperature gradients. This may involve scenarios in which the one data item is compared to a first data item of the at least two other data items in terms of both a temperature difference and a temperature gradient and to a second data item of the at least two other data items in terms of both a temperature difference and a temperature gradient. Alternatively, this may involve scenarios in which the one data item is compared to a first data item of the at least two other data items in terms of a temperature difference and to a second data item of the at least two other data items in terms of a temperature gradient.

In an example, the comparing comprises providing a temperature topology based on the plurality of data items and wherein the determining comprises determining a topology characteristic and comparing the determined topology characteristic to a characteristic threshold. The temperature topology may be based on a statistical parameter such as a geometric mean, a median or other weighted means of temperatures of data items from temperature sensors within the predefined radius of interest. This is to be understood in that a location on the temperature topology corresponding to a particular location on/in the battery assembly is assigned a value of the statistical parameter of the data items from temperature sensors within the predefined radius of interest around the specific location on/in the battery assembly. In other words, the temperature topology may be obtained by applying a sliding window over a matrix of the data items, wherein the data items are arranged in the matrix of data items in a way that corresponds to the locations of the associated temperature sensors on/in the battery assembly. Among data items within the sliding window, a statistical operation is carried out that yields the desired statistical parameter of the data items. The topology characteristic may involve a deviation of an individual data item with respect to the temperature topology at the location of the individual data item. The deviation may be expressed in absolute terms, i.e. as an absolute temperature difference, or as a multiple or fraction of a statistical measure indicative of a scatter of temperatures of data items within the sliding window. The statistical measure may comprise a variance or a standard deviation of data items within the sliding window or a span between a maximum and a minimum temperature of data items within the sliding window. The characteristic threshold may also be referred to as allowable characteristic threshold since no determination of an outlier data item and no denotation of a faulty temperature sensor is made if the characteristic threshold is not exceeded. This has the effect that the temperature indicated by a specific data item can be evaluated in the context of temperatures indicated by data items in a vicinity of the specific data item. Thus, the determination of outlier data items and faulty temperature sensors is facilitated.

In an example, the method of the first aspect applies at least two comparison criteria out of the temperature difference threshold, the temperature gradient threshold and the characteristic threshold of the topology characteristic in the step of comparing the data items with respect to the associated temperatures and/or the associated locations. The determination of one or more outlier data items out of the plurality of data items and the inference of the one or more temperature sensors associated with the one or more outlier data items to be faulty may be made if one of the at least two applied comparison criteria indicates a faulty temperature sensor. This reduces a rate of false negative inferences of a temperature sensor to be faulty. In other words, this reduces a number of occasions a temperature sensor that is actually faulty is inferred to be in order. Alternatively, the determination of one or more outlier data items out of the plurality of data items and the inference of the one or more temperature sensors associated with the one or more outlier data items to be faulty may be made if at least two of the applied comparison criteria indicate a faulty temperature sensor. This reduces a rate of false positive inferences of a temperature sensor to be faulty. In other words, this reduces a number of occasions a temperature sensor that is actually in order is inferred to be faulty.

In an example, each temperature sensor is in a one-to-one relationship with an associated battery cell of the battery assembly. A battery cell is to be understood as a self-contained electric energy storage subunit of the battery assembly. Usually, the battery assembly comprises a plurality of battery cells. Thus, each temperature sensor being in a one-to-one relationship with an associated battery cell of the battery assembly ensures that a battery cell is monitored by exactly one temperature sensor. This has the effect that there is no physical redundancy in the sense of multiple temperature sensors per battery cell required. Thus, instead of inferring that a specific temperature is faulty from a comparison to other temperature sensors that are associated with the same battery cell as the specific temperature sensor, the inference is made based on the above-described method. This reduces the total number of sensors that are needed to monitor the battery assembly without compromising on fault detection of temperature sensors. Assuming a given fault rate of temperature sensors, a system reliability of the battery assembly is increased by the use of fewer temperature sensors, i.e. using no more than one temperature sensor per battery cell.

In an example, all battery cells of the battery assembly may be monitored by exactly one temperature sensor. This allows a particularly close-meshed temperature monitoring of the battery assembly.

In an example, the temperature difference threshold, the temperature gradient threshold and/or the characteristic threshold are based on a usage history of at least one battery cell that is associated with a temperature sensor whose data item is included in the comparing of data items. This means that the temperature difference threshold, the temperature gradient threshold and/or the characteristic threshold are a function of said usage history. Said usage history is indicative of a degree to which the at least one battery cell that is associated with a temperature sensor whose data item is included in the comparing has been used up to the point in time when the step of comparing of data items is executed. The degree to which a battery cell has been used may also be referred to as a usage factor. The usage factor may be a logical value indicative of whether the at least one battery cell has been used or not within a predefined timeframe prior to the step of comparing of data items, i.e. if current has been drawn from or has been fed into the at least one battery cell within said predefined timeframe. Moreover, the usage factor may be a real number indicative of an amount of current that has been drawn from or that has been fed into the at least one battery cell within said predefined timeframe. The rationale behind this example is that a management system of the battery assembly may not make equal use of all battery cells of the battery assembly. This may apply in general and in particular when considering a specific moment in time. Instead, the management system of the battery assembly may opt for charging and/or discharging certain battery cells of the battery assembly at a higher current than other battery cells of the battery assembly. Some other battery cells may not be used for a certain time. Such a strategy may be pursued by the management system in order to even out degrees of charge of the individual battery cells of the battery assembly. Evening out degrees of charge of individual battery cells may be of particular importance, the older and more worn down the battery assembly gets. Due to a drift and/or difference in a degree of ageing of individual battery cells, individual cells may not contain equal amounts of usable electric energy even though all cells are fully charged. If a particular battery cell is charged and/or discharged at a higher current than another battery cell, the particular battery cell will naturally heat up more than the other battery cell. The usage history may be determined from current data indicative of current drawn from and/or fed into individual battery cells of the battery assembly. The management system of the battery assembly may comprise current sensors for determining said current data. All in all, considering a usage history of at least one battery cell when comparing associated data items reduces a rate of false positive inferences of a temperature to be faulty due to interventions of the management system of the battery assembly.

In an example, the allowable temperature difference threshold may be increased if the usage history of at least one battery cell that is associated with a temperature sensor whose data item is included in the comparing of data items differs from a reference usage history. The reference usage history may comprise an expected usage history of the at least one battery cell that is based on a driving cycle completed during the predefined timeframe. Additionally or alternatively, the reference usage history may comprise a usage history of another battery cell of the battery assembly whose data items are being compared to the data items of the at least one battery cell. Further additionally or alternatively, the reference usage history may comprise an average usage history of all battery cells of the battery assembly. Increasing the allowable temperature difference threshold in case of a deviating usage history of at least one battery cell whose data item is included in the comparing accounts for natural differences in temperatures of battery cells that occur due to different degrees of usage within the predefined timespan prior to the comparing. Thus, a reliability of the method for detecting a faulty temperature sensor is enhanced.

In an example, the allowable temperature gradient threshold may be increased if the usage history of at least one battery cell that is associated with a temperature sensor whose data item is included in the comparing of data items differs from a reference usage history. The reference usage history may comprise an expected usage history of the at least one battery cell that is based on a driving cycle completed during the predefined timeframe. Additionally or alternatively, the reference usage history may comprise a usage history of another battery cell of the battery assembly whose data items are being compared to the data items of the at least one battery cell. Further additionally or alternatively, the reference usage history may comprise an average usage history of all battery cells of the battery assembly. Increasing the allowable temperature gradient threshold in case of a deviating usage history of at least one battery cell whose data item is included in the comparing accounts for natural differences in temperatures of battery cells that occur due to different degrees of usage within the predefined timespan prior to the comparing. Thus, a reliability of the method for detecting a faulty temperature sensor is enhanced.

In an example, the allowable characteristic threshold may be increased if the usage history of at least one battery cell that is associated with a temperature sensor whose data item is included in the comparing of data items differs from a reference usage history. The reference usage history may comprise an expected usage history of the at least one battery cell that is based on a driving cycle completed during the predefined timeframe. Additionally or alternatively, the reference usage history may comprise a usage history of another battery cell of the battery assembly whose data items are being compared to the data items of the at least one battery cell. Further additionally or alternatively, the reference usage history may comprise an average usage history of all battery cells of the battery assembly. Increasing the allowable characteristic threshold in case of a deviating usage history of at least one battery cell whose data item is included in the comparing accounts for natural differences in temperatures of battery cells that occur due to different degrees of usage within the predefined timespan prior to the comparing. Thus, a reliability of the method for detecting a faulty temperature sensor is enhanced.

In an example, the method may comprise purposefully heating one or more of the battery cells of the battery assembly. The heating may be performed by a dedicated heating system integrated into the battery assembly. Additionally or alternatively, the heating may be performed by discharging at last one of the battery cells of the battery assembly and using the electric energy withdrawn from the at least one battery cell to charge at least one other battery cell of the battery assembly. If, during the purposeful heating, a data item of a temperature sensor associated with the one or more purposefully heated battery cells does not reflect a temperature increase over a temperature prior to the purposeful heating, i.e. if the respective temperature sensor is stuck, the data item is determined to be an outlier data item and the respective temperature sensor is inferred to be faulty. The outlined heating operations may be orchestrated by the management system of the battery assembly. This has the effect that faulty temperature sensors can be detected even though the vehicle is currently not being used, i.e. if the vehicle is not being driven or if its battery assembly is not being charged. It is noted that is also possible to purposefully heat the one or more of the battery cells of the battery assembly independently from the method according to the first aspect, i.e. independently from the method for detecting a faulty temperature sensor. This means that it is also possible to just purposefully heat the battery cells of the battery assembly by a dedicated heating system integrated into the battery assembly and/or by discharging at last one of the battery cells of the battery assembly and using the electric energy withdrawn from the at least one battery cell to charge at least one other battery cell of the battery assembly.

In an example, the method may comprise purposefully cooling one or more of the battery cells of the battery assembly. The cooling may be performed by a dedicated cooling system integrated into the battery assembly. Additionally or alternatively, the cooling may be performed by waiting for a predefined time period after a purposeful heating of one or more of the battery cells of the battery assembly. If, during the purposeful cooling, a data item of a temperature sensor associated with the one or more purposefully cooled battery cells does not reflect a temperature decrease over a temperature prior to the purposeful cooling, i.e. if the respective temperature sensor is stuck, the data item is determined to be an outlier data item and the respective temperature sensor is inferred to be faulty. The outlined cooling operations may be orchestrated by the management system of the battery assembly. This has the effect that faulty temperature sensors can be detected even though the vehicle is currently not being used, i.e. if the vehicle is not being driven or if its battery assembly is not being charged.

In an example, the method may further comprise performing an electrical short circuit check and/or an electromagnetic disturbance check of at least one temperature sensor. Additionally or alternatively, the method may comprise performing a plausibility check of a voltage provided by at least one temperature sensor in relation to a supply voltage provided to the at least one temperature sensor. Further additionally or alternatively, the method may comprise performing a plausibility check of a temperature that a data item from the at least one temperature sensor is indicative of. The plausibility check may comprise a comparison of the temperature that a data item from the at least one temperature sensor is indicative of to absolute measurement boundaries of the temperature sensor or to reasonably expected temperatures that the at least one temperature sensor is exposed to. This further increases a reliability of the method for detecting a faulty temperature sensor.

In an example, the method further comprises ignoring data items resulting from a faulty temperature sensor. Data items resulting from a faulty temperature sensor may be of a value that would require countermeasures in order to avoid further damage to the battery assembly or to the vehicle if the data items were correct, i.e. associated with an actual phenomenon. Such countermeasures may comprise targeted heating or cooling of specific regions within the battery assembly, a throttling of a maximum current being drained from the battery assembly or being fed into the battery assembly, or the release of fire extinguishing or at least fire retarding substances onto/into the battery assembly. By ignoring data items resulting from a faulty temperature sensor, an unnecessary triggering of countermeasures to avoid further damage to the battery assembly or to the vehicle may be avoided.

The method may be at least partly computer-implemented, and may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a second aspect, there is provided a data processing apparatus comprising means for carrying out the method of the first aspect. Providing such a data processing apparatus, a faulty temperature sensor may reliably be identified out of a plurality of temperature sensors in a battery assembly for a vehicle.

According to a third aspect, there is provided a computer program comprising instructions which, when the program is executed by a computer, cause the computer to carry out the method of the first aspect. Providing such a data computer program, a faulty temperature sensor may reliably be identified out of a plurality of temperature sensors in a battery assembly for a vehicle.

According to a fourth aspect, there is provided a computer-readable storage medium comprising instructions which, when executed by a computer, cause the computer to carry out the method of the first aspect. Providing such a computer-readable storage medium, a faulty temperature sensor may reliably be identified out of a plurality of temperature sensors in a battery assembly for a vehicle.

According to a fifth aspect, there is provided a battery assembly for a vehicle. The battery assembly comprises:
- a plurality of battery cells,
- a plurality of temperature sensors, wherein a singular temperature sensor is associated with at least some of the plurality of battery cells, and
- a data processing apparatus of the second aspect, wherein the plurality of temperature sensors are communicatively connected to the data processing apparatus.

A battery cell is understood as a self-contained electric energy storage subunit of the battery assembly. A temperature sensor being associated with one of the plurality of battery cells means that the respective temperature sensor determines a temperature of the one battery cell of the plurality of battery cells. Due to the fact that the plurality of temperature sensors is communicatively connected to the data processing apparatus, the data processing apparatus may receive data items indicative of a temperature of the battery cells. Receiving the data items may be accomplished through a wired or through a wireless connection to the plurality of temperature sensors. The wired connection to the plurality of temperature sensors may be foreseen if the data processing apparatus is internal to the vehicle. The wireless connection to the plurality of temperature sensors may be used if the data processing apparatus is external to the vehicle, e.g. an external cloud server. Providing such a battery assembly has the effect that a faulty temperature sensor out of a plurality of temperature sensors in the battery assembly may reliably be identified.

According to a sixth aspect, there is provided a vehicle comprising a battery assembly of the fifth aspect. Providing such a vehicle has the effect that a faulty temperature sensor out of a plurality of temperature sensors in the battery assembly of the vehicle may reliably be identified.

It should be noted that the above examples may be combined with each other irrespective of the aspect involved.

These and other aspects of the present disclosure will become apparent from and elucidated with reference to the examples described hereinafter.

### BRIEF DESCRIPTION OF DRAWINGS

Examples of the disclosure will be described in the following with reference to the following drawings.
- Figure 1: shows a vehicle according to the present disclosure comprising a battery assembly according to the present disclosure,
- Figure 2: shows a plurality of battery cells and a plurality of temperature sensors as part of the battery assembly of Figure 1,
- Figure 3: shows a diagram of five temperature measurements obtained from five different temperature sensors arranged at five different locations within the plurality of battery cells of Figure 2,
- Figure 4: shows two examples of a temperature measurement over time obtained from a single temperature sensor arranged on one of the plurality of battery cells of Figure 2,
- Figure 5: shows a temperature topology of the battery cells of Figure 2, and
- Figure 6: shows steps of a method for detecting a faulty temperature sensor out of a plurality of temperature sensors in a battery assembly for a vehicle.

### DETAILED DESCRIPTION

The Figures are merely schematic representations and serve only to illustrate examples of the disclosure. Identical or equivalent elements are in principle provided with the same reference signs.

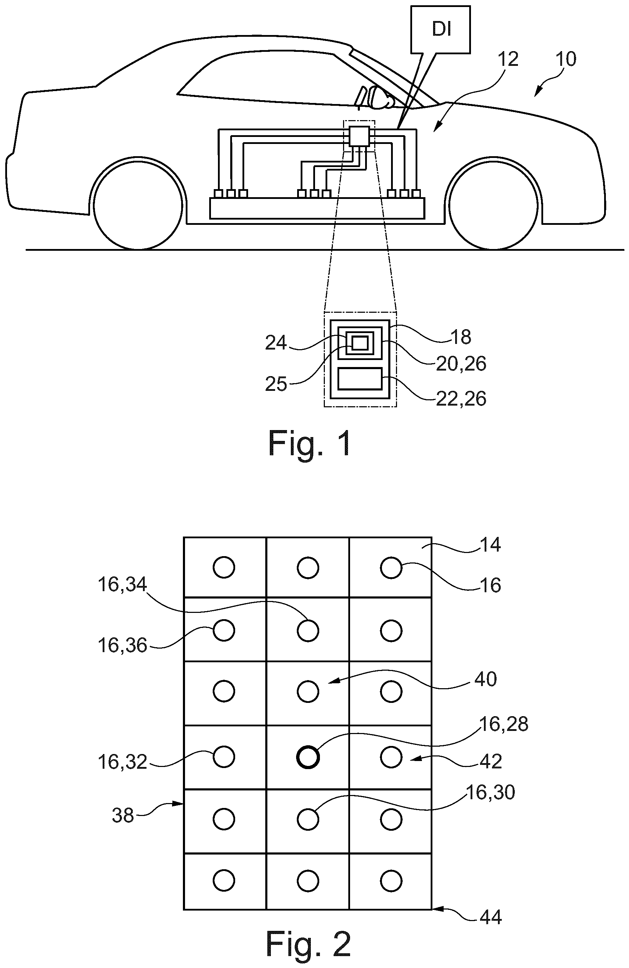

Figure 1 shows a vehicle 10.

The vehicle 10 comprises a battery assembly 12 which in the present example serves as a traction battery.

As can be seen from Figure 2, the battery assembly 12 comprises a plurality of battery cells 14. It is noted that the number of battery cells 14 and their arrangement is purely illustrative in Figure 2.

Moreover, the battery assembly 12 comprises a plurality of temperature sensors 16.

Each temperature sensor 16 is associated with one battery cell 14 of the battery assembly 12. In other words, each temperature sensor 16 is in a one-to-one relationship with an associated battery cell 14 of the battery assembly 12. Thus, there are as many temperature sensors 16 in the battery assembly 12 as there are battery cells 14 in the battery assembly 12.

Each battery cell 14 of the battery assembly 12 is monitored by the temperature sensor 16.

The battery assembly 12 further comprises a data processing apparatus 18. In the present example, the data processing apparatus 18 is arranged in an interior of the vehicle 10. In other words, the data processing apparatus 18 is internal to the vehicle 10.

The data processing apparatus 18 is communicatively connected to each of the plurality of temperature sensors 16 via wired connections. Thus, the data processing apparatus 18 may receive data items indicative of a temperature and a location of each of the temperature sensors 16 on/in the battery assembly 12. Since the location of the temperature sensors 16 does not change during use of the vehicle 10, the location of each of the temperature sensors 16 of which the data items are indicative, may be pre-programmed or stored on the data storage unit 20 which will be explained in the following.

The data processing apparatus 18 comprises a data storage unit 20 and a data processing unit 22.

The data storage unit 20 comprises a computer-readable storage medium 24.

On the computer-readable storage medium 24, there is provided a computer program 25.

The computer program 25 and, thus, also the computer-readable storage medium 24, comprise instructions which, when executed by the data processing unit 22, or, more generally speaking, a computer, cause the computer or the data processing unit 22 to carry out a method for detecting a faulty temperature sensor 16 out of a plurality of temperature sensors 16 in a battery assembly 12 for a vehicle 10.

Consequently, the data storage unit 20 and the data processing unit 22 form means 26 for carrying out the method for detecting a faulty temperature sensor 16 out of a plurality of temperature sensors 16 in a battery assembly 12 for a vehicle 10.

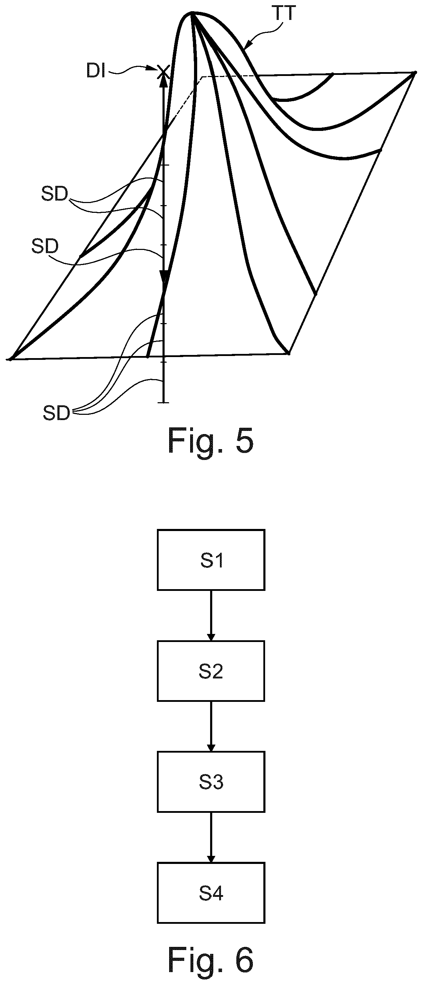

An illustration of steps of the method for detecting a faulty temperature sensor 16 out of a plurality of temperature sensors 16 in a battery assembly 12 for a vehicle 10 is given in Figure 6.

In step S 1 of the method, a plurality of data items DI is obtained. The plurality of data items DI is at least in part determined by the plurality of temperature sensors 16. Each data item DI is indicative of a temperature and a location of the associated temperature sensor 16, in other words of the temperature sensor 16 that the respective data item DI originates from.

Since, in the present example, each battery cell 14 of the battery assembly 12 comprises a dedicated temperature sensor 16, data items DI indicative of a temperature and a location of each battery cell 14 of the battery assembly 12 are obtained by the data processing apparatus 18.

In step S2 of the method, the obtained data items DI are compared with respect to the temperatures and the locations on/in the battery assembly 12 that they are indicative of.

The comparing will be explained at the examples of three use cases of the method for detecting a faulty temperature sensor 16 out of a plurality of temperature sensors 16 in a battery assembly 12 for a vehicle 10. The three use cases refer to the plurality of battery cells 14 shown in Figure 2, which comprise eighteen battery cells 14 arranged in three columns and six lines. The temperature sensor 16 corresponding to the battery cell 14 in the middle column and in the fourth line of battery cells 14 counted from the top of the illustration in Figure 2 will be investigated in any of the use cases. This means that it is determined whether this temperature sensor 16 is faulty or not. The respective temperature sensor 16 will be denoted as first temperature sensor 16, 28 in the following and is indicated by a thick line in Figure 2.

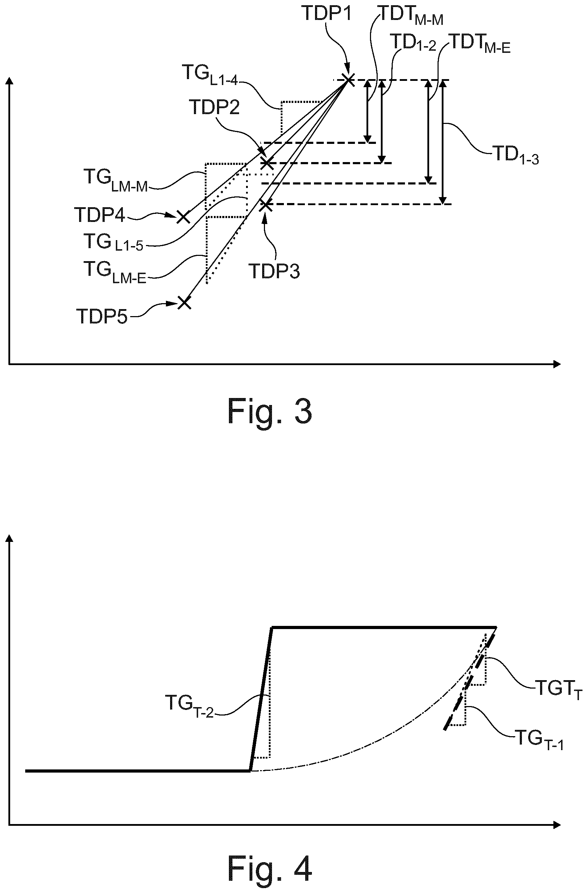

A first use case of the method is illustrated in Figure 3.

In the diagram of Figure 3, temperatures of five different temperature sensors 16 are plotted over their relative location on the battery assembly with respect to the location of the first temperature sensor 16, 28.

The temperature data point TDP 1 indicated at the top right of the diagram corresponds to the first temperature sensor 16, 28.

The two vertically aligned temperature data points TDP2, TDP3 in the middle section of the diagram correspond to a second temperature sensor 16, 30 and to a third temperature sensor 16, 32. The temperature data point TDP2 of the second temperature sensor 16, 30 is the temperature data point TDP2 on top and the temperature data point TDP3 of the third temperature sensor 16, 32 is the temperature data point TDP3 at the bottom of the two temperature data points TDP2, TDP3 in the middle section of the diagram of Figure 3.

Both the second temperature sensor 16, 30 and the third temperature sensor 16, 32 are located adjacent to the first temperature sensor 16, 28 in Figure 2. The second temperature sensor 16, 30 is arranged in the middle column of the three columns but in the fifth line when counted from the top of the illustration shown in Figure 2. The third temperature sensor 16, 32 is arranged in the left column of the three columns and in the fourth line when counted from the top of the illustration as shown in Figure 2.

The two vertically aligned temperature data points TDP4, TDP5 on the left of the diagram correspond to a fourth temperature sensor 16, 34 and to a fifth temperature sensor 16, 36. The temperature data point TDP4 of the fourth temperature sensor 16, 34 is the temperature data point TDP4 on top and the temperature data point TDP5 of the fifth temperature sensor 16, 36 is the temperature data point TDP5 at the bottom of the two temperature data points TDP4, TDP5 on the left of the diagram of Figure 3.

The fourth temperature sensor 16, 34 is not adjacent to the first temperature sensor 16, 28. Instead, the fourth temperature sensor 16, 34 is arranged in the middle column of the three columns and in the second line when counted from the top of the illustration as shown in Figure 2.

Also, the fifth temperature sensor 16, 36 is not adjacent to the first temperature sensor 16, 28. Instead, the fifth temperature sensor 16, 36 is arranged in the left column of the three columns and in the second line when counted from the top of the illustration as shown in Figure 2.

Thus, the third temperature sensor 16, 32 and the fifth temperature sensor 16, 36 are arranged at an edge 38 of the battery assembly 12. By contrast, the first temperature sensor 16, 28, the second temperature sensor 16, 30 and the fourth temperature sensor 16, 34 are not arranged at an edge 38 of the battery assembly 12.

A temperature difference TD₁₋₂ between the temperatures provided by the first temperature sensor 16, 28 and by the second temperature sensor 16, 30 is indicated by double arrow TD₁₋₂.

It can be observed that the temperature difference TD₁₋₂ is greater than a temperature difference threshold TDT_{M-M}, which is applied if both compared temperature sensors 16 are located in a middle portion 40 of the battery assembly 12 but not at an edge 38 of the battery assembly 12.

A temperature difference TD₁₋₃ between the temperatures provided by the first temperature sensor 16, 28 and by the third temperature sensor 16, 32 is indicated by double arrow TD₁₋₃.

It can be observed that the temperature difference TD₁₋₃ is greater than a temperature difference threshold TDT_{M-E}, which is applied if one of the compared temperature sensors 16 is located in the middle portion 40 but not at an edge 38 of the battery assembly 12 and the other one of the compared temperature sensors 16 is located at an edge 38 of the battery assembly 12.

The temperature difference threshold TDT_{M-E} is greater than the temperature difference threshold TDT_{M-M}. This takes into account that temperature differences TD within the middle portion 40 of the battery assembly 12 are usually smaller than temperature differences TD between the middle portion 40 and an edge 38 of the battery assembly 12. Thus, the applied temperature difference threshold TDT depends on the locations of the temperature sensors 16 in/on the battery assembly 12 from which the temperatures to be compared originate.

Since both the temperature difference TD₁₋₂ and the temperature difference TD₁₋₃ exceed their respective temperature difference threshold TDT, the data item DI being associated to the first temperature sensor 16, 28 could be determined to be an outlier data item DI and, consequently, the first temperature sensor 16, 28 could already be inferred to be a faulty temperature sensor 16 in a variant of the method for detecting a faulty temperature sensor 16 out of a plurality of temperature sensors 16 in a battery assembly 12 for a vehicle 10.

However, in the present use case of Figure 3, an option of the method shall be explained that additionally takes temperature gradients TG between compared temperatures and corresponding temperature gradient thresholds TGT into account. According to this other variant that will be further explained below, a data item DI is only determined as an outlier data item DI and the associated temperature sensor 16 is only inferred as faulty, if the temperature of the respective data item DI exceeds both applicable temperature difference threshold TDT and applicable temperature gradient threshold TGT.

A temperature gradient TG_{L1-4} between the temperatures provided by the first temperature sensor 16, 28 and by the fourth temperature sensor 16, 34 is indicated by the gradient triangle TG_{L1-4}. As the x-axis of the diagram of Figure 3 refers to a location of temperature sensors 16 on the battery assembly 12, the temperature gradient TG_{L1-4} is a temperature gradient TG over location.

It can be observed that the temperature gradient TG_{L1-4} is smaller than a temperature gradient threshold over location TGT_{LM-M}, which is applied if both compared temperature sensors 16 are located in the middle portion 40 but not at an edge 38 of the battery assembly 12.

Still, it can be observed that the temperature gradient TG_{L1-5} is smaller than a temperature gradient threshold over location TGT_{LM-E}, which is applied if one of the compared temperature sensors 16 is located in the middle portion 40 but not at an edge 38 of the battery assembly 12 and the other one of the compared temperature sensors 16 is located at an edge 38 of the battery assembly 12.

It is to be noted that the temperature gradient threshold over location TGT_{LM-M} is smaller than the temperature gradient threshold over location TGT_{LM-E}. This accounts for increased heat outflux to an environment of the battery assembly 12 at the edges 38 of the battery assembly 12 compared to the middle portion 40 of the battery assembly 12. Thus, the temperature gradient threshold TGT is different depending on a location of the temperature sensors 16 to be compared.

Although the absolute differences between the temperature of the first temperature sensor 16, 28 and the temperatures of the second 16, 30 and third temperature sensor 16, 32, respectively, exceed the applicable temperature difference thresholds TDT, the temperature gradients over location TGT_{L} between the temperature and location of the first temperature sensor 16, 28 and the temperature and location of the fourth 16, 34 and fifth temperature sensor 16, 36, respectively, do not exceed the applicable temperature gradient thresholds TGT.

Hence, according to this variant of the method, it is inferred that the data item DI of the first temperature sensor 16, 28 indicates an actually elevated temperature of the first temperature sensor 16, 28. Accordingly, the data item DI of the first temperature sensor 16, 28 is not determined to be an outlier data item DI and the associated first temperature sensor 16, 28 is not determined to be a faulty temperature sensor 16. Instead, the associated first temperature sensor 16, 28 is determined to be a regularly functioning temperature sensor 16.

As a consequence, countermeasures such as a cap on allowable electric current to be drawn from or fed into the battery assembly 12 may be introduced. Additionally or alternatively, an increased targeted cooling of the battery cell 12 in the middle column and in the fourth line as counted from the top of the illustration as shown in Figure 2 may be introduced.

It is noted that even though in the above-described use case, both temperature difference thresholds and temperature gradient thresholds have been considered, it is also possible to consider just one or more temperature difference thresholds or just one or more temperature gradient thresholds in other examples.

The second use case of the method is illustrated in Figure 4. Only the differences to the first use case of Figure 3 will be explained in the following.

In the diagram of Figure 4, two examples of a detected or measured temperature of one specific temperature sensor 16 is plotted over time. The one specific temperature sensor 16 is the first temperature sensor 16, 28 of the plurality of battery cells 14 of Figure 2.

A first example of the temperature of the first temperature sensor 16, 28 over time is indicated by a dash-dotted line in Figure 4.

From the dash-dotted line, it can be observed that the temperature of the first temperature sensor 16, 28 gradually increases over time. The highest temperature gradient TG over time is reached at an end of the plotted temperature increase. This can be seen from the dashed straight line that is drawn tangentially to the dash-dotted line representing the temperature at the end of the plotted temperature increase.

An inclination of the tangential line is indicated by the gradient triangle TG_{T-1}, which stands for temperature gradient over time in the first example.

It can be observed that the temperature gradient over time TG_{T-1} at the end of the plotted temperature increase is smaller than a temperature gradient threshold over time TGT_{T}, which is indicated in Figure 4 by the gradient triangle TGT_{T}.

Hence, for the first example of the second use case shown in Figure 4, it is inferred that the data items DI of the first temperature sensor 16, 28 indicate an actual temperature increase of the first temperature sensor 16, 28 over time. Accordingly, the data items DI of the first temperature sensor 16, 28 are not determined to be outlier data items DI and the associated first temperature sensor 16, 28 is not determined to be a faulty temperature sensor 16. Instead, the associated first temperature sensor 16, 28 is determined to be a regularly functioning temperature sensor 16.

The second example of the temperature of the first temperature sensor 16, 28 over time is indicated by a solid line in Figure 4.

From the solid line, it can be observed that the temperature of the first temperature sensor 16, 28 rapidly increases over a short period of time.

An inclination of the plotted temperature increase is indicated by the gradient triangle TG_{T-2}, which stands for temperature gradient over time in the second example.

It can be observed that the temperature gradient over time TG_{T-2} is greater than the temperature gradient threshold over time TGT_{T}, which is indicated in Figure 4 by the gradient triangle TGT_{T}.

Hence, for the second example of the second use case shown in Figure 4, it is inferred that the data items DI of the first temperature sensor 16, 28 indicate no actual temperature increase of the first temperature sensor 16, 28 over time. Accordingly, the data items DI of the first temperature sensor 16, 28 are determined to be outlier data items DI and the associated first temperature sensor 16, 28 is determined to be a faulty temperature sensor 16 (step S3 of the method).

In the following step S4, the data items DI from the first temperature sensor 16, 28 are ignored. Thus, no countermeasures as explained above in relation to the first use case of the method are introduced.

A third use case of the method is illustrated in Figure 5. Only the differences to the first use case of Figure 3 and to the second use case of Figure 4 will be explained in the following.

In the diagram of Figure 5, a three-dimensional temperature topology TT over a surface area 42 of the battery assembly 12 is shown.

The three-dimensional temperature topology TT spans over support points, wherein one support point is provided for each temperature sensor 16 of the battery assembly 12.

A support point is determined from a geometric average of the temperature of the respective temperature sensor 16 that the support point is determined for and from temperatures of temperature sensors 16 neighboring the respective temperature sensor 16. With reference to the plurality of battery cells 14 as drawn in Figure 2, the term "neighboring" is to be understood as temperature sensors 16 associated with battery cells 14 being directly adjacent to battery cells 14 of the respective temperature sensor 16 in a horizontal direction, in a vertical direction and in two diagonal directions. Thus, if the respective temperature sensor 16 forms part of the middle column and is located in any of the second to fifth line counted from the top of the battery assembly 12 as drawn in Figure 2, one temperature sensor 16 may comprise up to eight neighboring temperature sensors 16. If the respective temperature sensor is located in a corner 44 of the battery assembly 12 as drawn in Figure 2, one temperature sensor 16 may comprise only three neighboring temperature sensors 16.

In other words, the support point for a respective temperature sensor 16 is calculated from a sliding window of a size of 3x3 temperature sensors 16 sliding along the plurality of battery cells 14, wherein the respective temperature sensor 16 is in the center of the sliding window. The calculation comprises a determination of a geometric mean of the temperatures of the temperature sensors 16 within the sliding window.

By connecting the support points of all temperature sensors 16 by a three-dimensional surface, the temperature topology TT of Figure 5 is obtained.

In addition to the geometric mean, a standard deviation is determined from the temperatures of the temperature sensors 16 within the sliding window. Thus, each support point is assigned a standard deviation SD.

If an absolute temperature of a temperature sensor 16 deviates from the value of its corresponding support point by a margin smaller than or equal to three standard deviations (comparison of step S2 of the method), the respective temperature sensor 16 is not inferred to be faulty and its associated data item DI is not determined to be an outlier data item DI.

If an absolute temperature of a temperature sensor 16 deviates from the value of its corresponding support point by a margin greater than three standard deviations (comparison of step S2 of the method), the respective temperature sensor 16 is inferred to be faulty and its associated data DI item is determined to be an outlier data item DI (step S3).

In the present use case of Figure 5, three standard deviations SD of the sliding window having the first temperature sensor 16, 28 of Figure 2 at its center are indicated on both sides of the surface of the temperature topology TT in a direction parallel to a vertical z-axis of the diagram, i.e. the height direction of the diagram.

It can be observed that the data item DI of the first temperature sensor 16, 28, which is indicated by a cross is located further away from the surface of the temperature topology TT than three standard deviations SD in a direction parallel to the vertical z-axis.

Thus, the first temperature sensor 16, 28 is inferred to be faulty and its associated data item DI is determined to be an outlier data item DI (step S3).

It is to be noted that the temperature difference thresholds TDT applied in the example of Figure 3, the temperature gradient thresholds TGT applied in the examples of Figures 3 and 4 and the margin applied in the example of Figure 5 do not necessarily have to be constant values. They may be adapted based on a usage history of the battery cells 14 to which temperature sensors 16, 28, 30, 32, 34, 36 are associated that provide temperatures that are being compared in step S2 of the method.

In a further development of the example of Figure 3, the temperature difference threshold TDT_{M-E} is increased by 20% if the battery cells 14 at the edges 38 of the battery assembly 12 have been drained more than twice an amount of electric energy than the battery cells 14 in the middle portion 40 of the battery assembly 12 within a predefined timespan of 15 minutes prior to executing step S 1 of the method.

A higher degree of usage of battery cells 14 in the middle portion 40 compared to battery cells 14 at the edges 38 is a condition of the battery assembly 12 that can often be observed in cases of an aged battery assembly 12.

A battery management system tries to even out states of charge of battery cells 14 of the battery assembly 12. Since battery cells 14 at the edges 38 of the battery assembly 12 are cooler during most of a service life of the battery assembly 12, they age at a lower rate than battery cells 14 in the middle portion 40 of the battery assembly 12.

As a consequence, battery cells 14 at the edges 38 of the battery assembly 12 tend to exhibit a higher usable capacity for electric energy storage than battery cells 14 in the middle portion 40 of the battery assembly 12 towards an end of the service life of the battery assembly 12.

Thus, towards an end of the service life of the battery assembly 12, battery cells 14 at the edges 38 of the battery assembly 12 tend to be used to a higher degree than battery cells 14 in the middle portion 40 of the battery assembly 12. This causes the battery cells 14 at the edges 38 to be much warmer than the battery cells 14 in the middle portion 40 of the battery assembly 12.

This is in contrast to a temperature distribution within the battery assembly 12 as it can be observed during most of the service life of the battery assembly 12 (edges 30 cooler than middle portion 40). Therefore, it is crucial to adapt the temperature difference threshold TDT, the temperature gradient threshold TGT and/or the margin in case of a temperature topology TT based on a usage history of the individual battery cells 14. This particularly ensures a high reliability of detection results of the method for detecting a faulty temperature sensor over a whole service life of the battery assembly 12.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: battery assembly
- 14: battery cell
- 16: temperature sensor
- 18: data processing apparatus
- 20: data storage unit
- 22: data processing unit
- 24: computer-readable storage medium
- 25: computer program
- 26: means for carrying out a method for detecting a faulty temperature sensor out of a plurality of temperature sensors in a battery assembly for a vehicle
- 28: first temperature sensor
- 30: second temperature sensor
- 32: third temperature sensor
- 34: fourth temperature sensor
- 36: fifth temperature sensor
- 38: edge of battery assembly
- 40: middle portion of battery assembly
- 42: surface area of battery assembly
- 44: corner of battery assembly

- DI: data item
- SD: standard deviation
- TD: temperature difference
- TDP: temperature data point of temperature sensor
- TDT: temperature difference threshold
- TG: temperature gradient
- TGT: temperature gradient threshold
- TT: temperature topology

## Claims

1. A method for detecting a faulty temperature sensor (16, 28, 30, 32, 34, 36) out of a plurality of temperature sensors (16, 28, 30, 32, 34, 36) in a battery assembly (12) for a vehicle (10), wherein each of the plurality of temperature sensors (16, 28, 30, 32, 34, 36) is arranged in an associated location, the method comprising:
- obtaining a plurality of data items (DI), wherein each data item (DI) is associated with a temperature sensor (16, 28, 30, 32, 34, 36) out of the plurality of temperature sensors (16, 28, 30, 32, 34, 36) and wherein each data item (DI) is indicative of a temperature and a location of the associated temperature sensor (16, 28, 30, 32, 34, 36),
- comparing the data items (DI) with respect to the associated temperatures and/or the associated locations,
- determining, based on the comparing, one or more outlier data items (DI) out of the plurality of data items (DI) and inferring the one or more temperature sensors (16, 28, 30, 32, 34, 36) associated with the one or more outlier data items (DI) to be faulty, or
determining, based on the comparing, an absence of outlier data items (DI).

2. The method of claim 1, wherein the comparing comprises calculating temperature differences (TD) between at least some data items (DI) and wherein the determining comprises comparing the calculated temperatures differences (TD) to a temperature difference threshold (TDT).

3. The method of claim 2, wherein the temperature difference threshold (TDT) is based on the locations of the compared data items (DI).

4. The method of any one of the preceding claims, wherein the comparing comprises calculating temperature gradients (TG) between at least some data items (DI) and wherein the determining comprises comparing the calculated temperatures gradients (TG) to a temperature gradient threshold (TGT).

5. The method of claim 4, wherein the temperature gradients (TG) are temperature gradients (TG) over time or temperature gradients (TG) over location.

6. The method of claims 4 or 5, wherein the temperature gradient threshold (TGT) is based on the locations of the compared data items (DI).

7. The method of any one of the preceding claims, wherein the comparing comprises providing a temperature topology (TT) based on the plurality of data items (DI) and wherein the determining comprises determining a topology characteristic and comparing the determined topology characteristic to a characteristic threshold.

8. The method of any one of the preceding claims, wherein each temperature sensor (16, 28, 30, 32, 34, 36) is in a one-to-one relationship with an associated battery cell (14) of the battery assembly (12).

9. The method of claim 8 and any one of claims 2 to 7, wherein the temperature difference threshold (TDT), the temperature gradient threshold (TGT) and/or the characteristic threshold are based on a usage history of at least one battery cell (14) that is associated with a temperature sensor (16, 28, 30, 32, 34, 36) whose data item (DI) is included in the comparing of data items (DI).

10. The method of any one of the preceding claims, further comprising ignoring data items (DI) resulting from a faulty temperature sensor (16, 28, 30, 32, 34, 36).

11. A data processing apparatus (18) comprising means (26) for carrying out the method of any one of the preceding claims.

12. A computer program (25) comprising instructions which, when the computer program (25) is executed by a computer, cause the computer to carry out the method of claims 1 to 10.

13. A computer-readable storage medium (24) comprising instructions which, when executed by a computer, cause the computer to carry out the method of claims 1 to 10.

14. A battery assembly (12) for a vehicle (10), the battery assembly (12) comprising:
- a plurality of battery cells (14),
- a plurality of temperature sensors (16, 28, 30, 32, 34, 36), wherein a singular temperature sensor (16, 28, 30, 32, 34, 36) is associated with at least some of the plurality of battery cells (14), and
- a data processing apparatus (18) of claim 11, wherein the plurality of temperature sensors (16, 28, 30, 32, 34, 36) are communicatively connected to the data processing apparatus (18).

15. A vehicle (10) comprising a battery assembly (12) of claim 14.
